# EUROPÄISCHE PATENTANMELDUNG

(11) **EP 4 202 383 A1**
(43) Veröffentlichungstag der Anmeldung: **28.06.2023**
(21) Anmeldenummer: 22215288.6
(22) Anmeldetag: 21.12.2022
(51) Int. Cl.: G01J 1/02, G01J 1/42, G01N 21/94, G01N 21/958, H05B 45/12, H05B 45/18

(54) **LEUCHTENSYSTEM SOWIE STRAHLUNGSSENSORSYSTEM MIT LEUCHTENSYSTEM**

(30) Priorität: 21.12.2021 DE 102021134127
(71) Anmelder: Deutsches Zentrum für Luft- und Raumfahrt e.V., 53227 Bonn (DE)
(72) Erfinder: Wilbert, Stefan, 51147 Köln (DE); Wolfertstetter, Fabian, 04409 Alicún (ES); Schmidt, Karsten, 17235 Neustrelitz (DE); Borg, Erik, 16247 Joachimsthal (DE); Carballo, Jose Antonio, 04006 Almería (ES)
(74) Vertreter: dompatent von Kreisler Selting Werner - Partnerschaft von Patent- und Rechtsanwälten mbB

(57) **Zusammenfassung**

Leuchtensystem (1) zur Erzeugung von Licht einer konstanten Bestrahlungsstärke oder einer Bestrahlungsstärke mit einer bekannten Abweichung von einem Referenzpunkt, mit mindestens einer Lampe (3), mit einem länglichen Hohlkörper als Gehäuse (5), wobei das Gehäuse (5) ein geschlossenes Ende (5a) und ein offenes Ende (5b) aufweist, wobei die Lampe (3) in dem Gehäuse (5) angeordnet ist und das offene Ende (5b) eine Strahlungsöffnung (7) bildet, mit einer Steuervorrichtung zum Steuern der mindestens einen Lampe (3), mit einer Konstantstromquelle und/oder einer justierbaren Stromquelle, die die mindestens eine Lampe (3) mit Strom versorgt und mit mindestens einem Sensor, der in dem Gehäuse (5) angeordnet ist und über den mindestens ein Eigenschaftswert der mindestens einen Lampe bestimmbar ist.

## Beschreibung

Die vorliegende Erfindung betrifft ein Leuchtensystem sowie ein Strahlungssensorsystem mit einem Leuchtensystem.

Strahlungssensorsysteme wie beispielsweise Direktstrahlungssensoren oder Globalstrahlungssensoren werden draußen verwendet und sind somit Umgebungseinflüssen ausgesetzt. Daher ist eine regelmäßige Inspektion und Reinigung erforderlich, um den Einfluss von Verschmutzungen bei der Messung gering zu halten.

Es ist jedoch schwierig festzustellen, zu welchem Zeitpunkt ein Verschmutzungsgrad eines Eintrittsfensters eines Strahlungssensorsystems eine Reinigung erforderlich macht, sodass häufig Reinigungsintervalle zu klein gewählt werden. Auch ist es schwierig festzustellen, ob eventuell Defekte an dem Strahlungssensorsystem vorliegen, die die Messung beeinflussen.

Erste Versuche der Anmelderin sehen vor, dass ein Globalstrahlungssensor mit einer Leuchte zu unterschiedlichen Zeitpunkten beleuchtet wird, wobei die Veränderung des Messsignals benutzt wird, um auf einen Verschmutzungsgrad zu schließen.

Bei derartigen Verfahren sowie bei anderen Anwendungen ist es jedoch notwendig, dass eine reproduzierbare Beleuchtung erfolgt oder dass bekannt ist, in welchem Umfang eine Abweichung bei der Beleuchtung vorliegt, um nachvollziehen zu können, ob ein Messergebnis durch eine Änderung der Bestrahlungsstärke beeinflusst wurde.

Es ist daher Aufgabe der vorliegenden Erfindung, ein Leuchtensystem zu schaffen, das diese Voraussetzungen erfüllt. Es ist ferner Aufgabe der vorliegenden Erfindung, ein Strahlungssensorsystem mit einem derartigen Leuchtensystem zu schaffen.

Das erfindungsgemäße Leuchtensystem ist definiert durch die Merkmale des Anspruchs 1. Das erfindungsgemäße Strahlensensorsystem ist definiert durch die Merkmale des Anspruchs 11.

Das erfindungsgemäße Leuchtensystem zur Erzeugung von Licht einer konstanten Bestrahlungsstärke oder einer Bestrahlungsstärke mit einer bekannten Abweichung von einem Referenzpunkt weist mindestens eine Lampe und einen länglichen Hohlkörper als Gehäuse auf, wobei das Gehäuse ein geschlossenes Ende und ein offenes Ende aufweist. Die Lampe ist im Gehäuse, vorzugsweise in einem von dem Gehäuse gebildeten Innenraum, angeordnet und das offene Ende bildet eine Strahlungsöffnung. Das Leuchtensystem weist ferner eine Steuervorrichtung zum Steuern der mindestens einen Lampe sowie eine Konstantstromquelle und/oder eine justierbare Stromquelle auf, die die mindestens eine Lampe mit Strom versorgt. In dem Gehäuse, vorzugsweise in dem von dem Gehäuse gebildeten Innenraum, ist mindestens ein Sensor angeordnet, über den mindestens ein Eigenschaftswert der mindestens einen Lampe bestimmbar ist. Das Gehäuse kann beispielsweise hohlzylindrisch ausgebildet sein und beispielsweise eine im Querschnitt kreisförmige, ovale, ellipsenförmige oder eckigen Außenkontur aufweisen. Auch kann das Gehäuse eine sich verjüngende Form, beispielsweise konische Form aufweisen.

Bei dem erfindungsgemäßen Leuchtensystem ist die mindestens eine Lampe somit geschützt in dem Gehäuse aufgenommen. Über die Konstantstromquelle und/oder die justierbare Stromquelle kann die mindestens eine Lampe so betrieben werden, dass sie Licht erzeugt, dass durch die Strahlungsöffnung aus dem Gehäuse gelangen kann, um ein gewünschtes Objekt zu bestrahlen. Der über den mindestens einen Sensor bestimmte Eigenschaftswert der mindestens einen Lampe kann dazu verwendet werden, um entweder mittels der Steuervorrichtung die Lampe so zu steuern, dass eine konstante Bestrahlungsstärke vorliegt, oder es kann auf eine Abweichung der Bestrahlungsstärke von einem Referenzpunkt geschlossen werden. Auf diese Weise kann das erfindungsgemäße Leuchtensystem beispielsweise in vorteilhafter Weise für Strahlungssensorsysteme verwendet werden. Auch kann das erfindungsgemäße Leuchtensystem beispielsweise zu Kalibrierungszwecken verwendet werden.

Dadurch, dass die Lampe in dem hohlzylindrischen Gehäuse angeordnet ist, ist diese weitestgehend gegenüber Umwelteinflüssen geschützt, sodass die mindestens eine Lampe nicht oder nur in geringem Maße zu Verschmutzungen neigt, sodass das von der Lampe erzeugte Licht nicht oder nur in geringem Maße durch Verschmutzungen in dem Leuchtensystem beeinflusst werden kann.

Vorzugsweise ist vorgesehen, dass das erfindungsgemäße Leuchtensystem eine Abdeckung aufweist, mittels der die Strahlungsöffnung verschließbar ist. Über die Abdeckung kann somit das Gehäuse auch an dem offenen Ende verschlossen werden, sodass in Zeiten, in denen das erfindungsgemäße Leuchtensystem nicht verwendet wird, der Innenraum des Gehäuses vollständig gegenüber Umwelteinflüssen wie Staub, Nässe oder anderen Verschmutzungen geschützt ist.

Die Abdeckung kann beispielsweise als Klappe, verschließbare Blende oder Rollladen ausgebildet sein. Die verschließbare Blende kann beispielsweise als Irisblende ausgebildet sein. Derartige Abdeckungen haben sich als besonders vorteilhaft erwiesen. Die Abdeckung kann einen Antrieb aufweisen, so dass die Abdeckung automatisch betrieben werden kann.

Vorzugsweise ist vorgesehen, dass das Gehäuse eine vorzugsweise hohlzylindrische Form aufweist und als Kollimator mit Apertur ausgebildet ist, wobei die Apertur die Strahlungsöffnung bildet. Das in dem Fall vorzugsweise hohlzylindrische Gehäuse ist somit an dem offenen Ende nicht vollständig geöffnet, sondern nur im Bereich der Apertur. Die Öffnung ist somit relativ klein gehalten, wodurch während der Benutzung des erfindungsgemäßen Leuchtensystems die Verschmutzungsneigung der in dem Gehäuse angeordneten Lampe gering gehalten wird.

Durch die Ausgestaltung des Gehäuses als Kollimator wird darüber hinaus die von der mindestens einen Lampe erzeugte Strahlung in vorteilhafter Weise gerichtet, wobei ein nahezu paralleler Strahlengang erzeugt wird. Ein paralleler Strahlengang hat Vorteile bei der Beleuchtung eines Objekts.

Das Gehäuse kann beispielsweise mindestens 20 cm, vorzugsweise mindestens 25 cm lang sein.

Die mindestens eine Lampe kann beispielsweise als mindestens eine LED ausgebildet sein.

Vorzugsweise ist vorgesehen, dass der mindestens eine Sensor ein Temperatursensor ist, wobei über den Sensor eine Temperatur der mindestens einen Lampe als Eigenschaftswert der Lampe bestimmbar ist. Der Sensor kann beispielsweise direkt neben der mindestens einen Lampe angeordnet sein, beispielsweise mit einem Abstand von maximal 1 cm. Der Temperatursensor kann auch einen Temperatur-Fühler aufweisen, der an der Lampe angeschlossen ist, d.h. diese berührt.

Über die Temperatur als Eigenschaftswert der Lampe kann in vorteilhafter Weise auf die emittierte Strahlung der Lampe geschlossen werden. Beispielsweise kann bei der Verwendung des Leuchtensystems die Temperatur als Eigenschaftswert benutzt werden, um einen Temperatureffekt über eine Korrekturfunktion zu korrigieren. Auch kann die Temperatur genutzt werden, um die Lampe so zu steuern, dass eine konstante Beleuchtungsstärke vorliegt. Bei der Verwendung der Temperatur zur Korrektur kann die Abhängigkeit der Bestrahlungsstärke von der gemessenen Temperatur genutzt werden, um die Abweichung der Bestrahlungsstärke von einem Referenzpunkt zu bestimmen.

In einer Ausführungsform des erfindungsgemäßen Leuchtensystems ist eine Vorrichtung zur Erzeugung einer Luftströmung in dem Gehäuse, vorzugsweise in dem von dem Gehäuse gebildeten Innenraum, vorgesehen, wobei die Luftströmung in Richtung zu der Strahlungsöffnung, vorzugsweise auf die Strahlungsöffnung, gerichtet ist. Über die Luftströmung wird erreicht, dass Staub und andere kleine Schmutzpartikel durch die Strahlungsöffnung nicht in das Innere des Gehäuses gelangen können oder mittels der Luftströmung durch die Strahlungsöffnung aus dem Gehäuse transportiert werden. Dadurch wird die Verschmutzungsneigung der mindestens einen Lampe weiter reduziert.

Die Vorrichtung zur Erzeugung einer Luftströmung kann ein in oder an dem Gehäuse angeordneter Ventilator sein.

Erfindungsgemäß kann vorgesehen sein, dass ein abnehmbarer Deckel das Gehäuse am geschlossenen Ende verschließt, wobei in oder an dem Deckel die mindestens eine Lampe und der mindestens eine Sensor angeordnet sind. Mit anderen Worten: Die Lampe und der mindestens eine Sensor können zusammen mit dem Deckel abgenommen werden, wodurch die Lampe und der mindestens eine Sensor zu Wartungszwecken in vorteilhafter Weise erreichbar sind. Ferner können mittels des Deckels die Lampe und der mindestens eine Sensor in vorteilhafter Weise direkt am geschlossenen Ende des Gehäuses angeordnet werden, wodurch die Lampe und der mindestens eine Sensor in Bezug auf das offenen Ende sehr tief in dem Gehäuse angeordnet sind, wodurch die Verschmutzungsneigung gering gehalten wird.

Grundsätzlich kann auch bei einer Ausführungsform des Gehäuses ohne den abnehmbaren Deckel vorgesehen sein, dass die Lampe und/oder der mindestens eine Sensor direkt am oder nahe an dem geschlossenen Ende angeordnet sind.

Bei dem erfindungsgemäßen Leuchtensystem kann insbesondere vorgesehen sein, dass in dem Gehäuse keine weiteren Teile angeordnet sind, durch die die Lichtstrahlung der mindestens einen Lampe transmittieren muss, wie beispielsweise Abdeckfenster ö. Ä., die zu Verschmutzungen neigen könnten.

In einer Ausführungsform der Erfindung kann vorgesehen sein, dass der mindestens eine Sensor eine Photodiode ist, die von der mindestens einen Lampe ausgestrahlte Lichtstrahlung misst. Über die Photodiode kann somit direkt gemessen werden, wie viel Licht die Lampe ausstrahlt und dieser Eigenschaftswert kann beispielsweise für die Steuerung der Lampe oder für etwaige Korrekturfunktionen genutzt werden.

Die Photodiode kann beispielsweise in einer Seitenwandung des hohlzylindrischen Gehäuses oder an einer die Apertur umgebenden Kragenwand angeordnet sein. Auch ist es möglich, dass die Photodiode direkt im Lichtkegel der Lampe angeordnet ist, beispielsweise über eine in den Innenraum des Gehäuses hineinragende Halterung.

Das erfindungsgemäße Leuchtensystem kann auch ein Kühlsystem für die mindestens eine Lampe vorsehen. Beispielsweise kann das Kühlsystem einen Ventilator und/oder ein Peltierelement aufweisen. Auf diese Weise lässt sich die Lampe in vorteilhafter Weise kühlen. Das Kühlsystem kann genutzt werden, um den Temperatureinfluss auf die durch die Lampe hervorgerufene Bestrahlungsstärke zu vermeiden, indem bei einer zu hohen Temperatur die Lampe entsprechend gekühlt wird. Das Kühlsystem kann dazu von der Steuervorrichtung zum Beispiel in Abhängigkeit von dem Eigenschaftswert gesteuert werden. Das Kühlsystem kann in oder an dem Deckel angeordnet sein.

Bei dem erfindungsgemäßen Leuchtensystem kann ferner vorgesehen sein, dass die Steuervorrichtung eine Zeitschalter aufweist, über den die mindestens eine Lampe angesteuert wird. Wenn das erfindungsgemäße Leuchtensystem beispielsweise für Messungen an Strahlungssensorsystem verwendet wird, kann mittels des Zeitschalters die Lampe so gesteuert werden, dass eine entsprechende Messung nur in einem bestimmten Zeitfenster nach dem Einschalten der Lampe erfolgt. Dazu könnte beispielsweise vorgesehen sein, dass die Abdeckung des offenen Endes des hohlzylindrischen Gehäuses auch erst nach einer bestimmten Zeit nach dem Einschalten der Lampe geöffnet wird. Der Zeitschalter kann auch dafür verwendet werden, dass die mindestens eine Lampe nach einer bestimmten Zeit nach dem Einschalten ausgeschaltet wird, sodass keine weitere Messung erfolgen kann.

Das erfindungsgemäße Leuchtensystem kann auch vorsehen, dass das Gehäuse an einer Bewegungsvorrichtung angeordnet ist, wobei die Bewegungsvorrichtung das Gehäuse zu einem zu beleuchtenden Objekt bewegt. Mit anderen Worten: Durch die Bewegung des Gehäuses wird auch die darin befindliche mindestens eine Lampe und der mindestens eine Sensor entsprechend mitbewegt. Mittels der Bewegungsvorrichtung kann somit das Gehäuse mit der mindestens einen Lampe und dem mindestens einen Sensor zu dem Objekt zu Beleuchtungszwecken bewegt und nach der Beleuchtung von diesem wieder weg bewegt werden. Dadurch kann das zu beleuchtende Objekt grundsätzlich frei zugänglich sein und nur, wenn es beleuchtet werden soll, wird das Gehäuse mit der mindestens einen Lampe und dem mindestens einen Sensor an diese herangeführt.

Das erfindungsgemäße Strahlensensorsystem zur Bestimmung von Solarstrahlung weist mindestens eine Sensorvorrichtung und eine Zustandsbestimmungsvorrichtung auf, wobei die Zustandsbestimmungsvorrichtung das erfindungsgemäße Leuchtensystem aufweist. Mittels der Sensorvorrichtung des Strahlungssensorsystems kann Solarstrahlung gemessen werden. Die Zustandsbestimmungsvorrichtung ist vorgesehen, um den Zustand der Sensorvorrichtung zu bestimmen, beispielsweise einen Verschmutzungsgrad oder etwaige Defekte. Zu einem Zeitpunkt, an dem keine Solarstrahlung auf die Sensorvorrichtung strahlt, kann mittels des erfindungsgemäßen Leuchtensystems der Zustandsbestimmungsvorrichtung die Sensorvorrichtung bestrahlt werden, sodass beispielsweise eine Verschmutzung eines Eintrittsfensters der Sensorvorrichtung bestimmbar ist. Da das erfindungsgemäße Leuchtensystem Licht mit einer konstanten Bestrahlungsstärke oder einer Bestrahlungsstärke mit einer bekannten Abweichung von einem Referenzpunkt erzeugt, ist bei der Bestimmung des Zustands der Sensorvorrichtung bekannt, in welcher Bestrahlungsstärke die Sensorvorrichtung bestrahlt wird, sodass der Zustand der Sensorvorrichtung in vorteilhafter Weise bestimmbar ist, beispielsweise über eine Abweichung des bestimmten Istwerts von einem Sollwert.

Die Sensorvorrichtung kann beispielsweise ein Direktstrahlungssensor sein, wobei der Direktstrahlungssensor und das Leuchtensystem zur Durchführung einer Zustandsbestimmung zueinander ausrichtbar sind. Der Direktstrahlungssensor kann beispielsweise ein Pyrheliometer oder ein Sonnenphotometer sein. Dabei kann vorgesehen sein, dass der Direktstrahlungssensor an einer Nachführeinrichtung angeordnet ist, mittels der der Direktstrahlungssensor dem Sonnenstand nachführbar und zu dem Leuchtensystem ausrichtbar ist. Direktstrahlungssensoren sind üblicherweise an Nachführeinrichtungen angeordnet, um den Direktstrahlungssensor dem Sonnenstand nachzuführen. Mittels der Nachführeinrichtung kann nun auch vorgesehen sein, dass der Direktstrahlungssensor zu dem Leuchtensystem ausgerichtet wird.

Die Sensorvorrichtung kann auch ein Globalstrahlungssensor sein, wobei der Globalstrahlungssensor und das Leuchtensystem zur Durchführung einer Zustandsbestimmung zueinander ausrichtbar sind. Der Globalstrahlungssensor kann beispielsweise ein Pyranometer sein. Im Gegensatz zu Direktstrahlungssensoren, die nur ein sehr kleines Sichtfeld haben, sodass die Ausrichtung zu dem Leuchtensystem relativ genau erfolgen muss, muss das Leuchtensystem bei Globalstrahlungssensoren lediglich das relativ große Sichtfeld bestrahlen, sodass keine sehr genaue Ausrichtung notwendig ist.

Es kann vorgesehen sein, dass der Globalstrahlungssensor an einer Bewegungseinrichtung angeordnet ist, mittels der der Globalstrahlungssensor zu dem Leuchtensystem ausrichtbar ist. Alternativ kann vorgesehen sein, dass die Bewegungsvorrichtung das Gehäuse des Leuchtensystems zum Ausrichten des Leuchtensystems mit den Globalstrahlungssensor zu dem Globalstrahlungssensor bewegt.

Bei dem erfindungsgemäßen Strahlungssensorsystem kann somit vorgesehen sein, dass entweder der Globalstrahlungssensor mittels einer Bewegungseinrichtung derart bewegt wird, dass das Leuchtensystem den Globalstrahlungssensor bestrahlen kann, oder dass das Gehäuse des Leuchtensystems durch die Bewegungsvorrichtung des Leuchtensystems derart bewegt wird, dass es den Globalstrahlungssensor bestrahlen kann.

Im Folgenden wird unter Bezugnahme auf die nachfolgenden Figuren die Erfindung näher erläutert. Es zeigen:
- Fig. 1: eine schematische Schnittdarstellung eines erfindungsgemäßen Leuchtensystems und
- Fig. 2: eine schematische Darstellung eines Ausführungsbeispiels eines erfindungsgemäßen Strahlungssensorsystems.

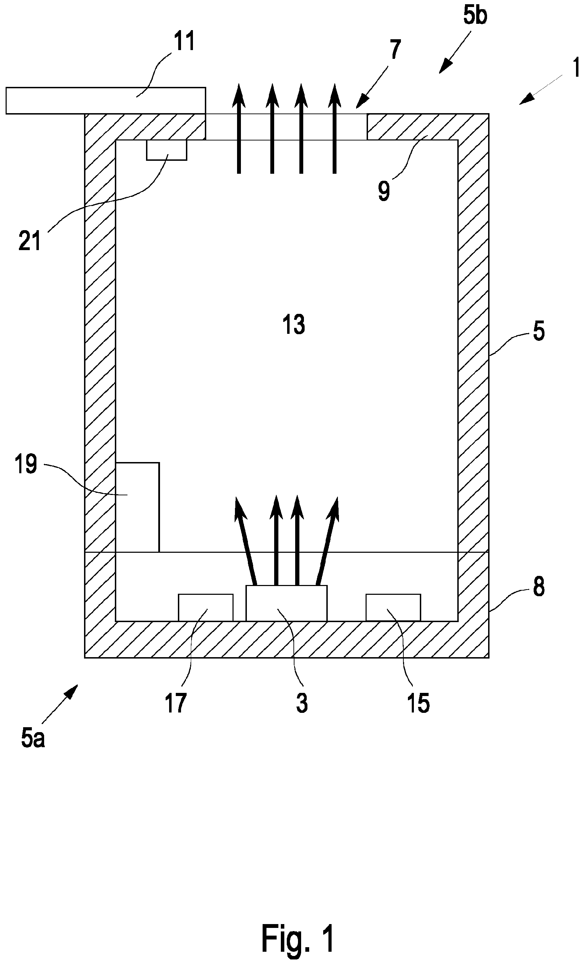

In Fig. 1 ist ein erfindungsgemäßes Leuchtensystem 1 schematisch im Schnitt dargestellt. Das erfindungsgemäße Leuchtensystem 1 weist eine Lampe 3 in Form einer LED auf, die in einem Gehäuse 5 angeordnet ist. Das Gehäuse 5 weist ein geschlossenes Ende 5a und ein offenes Ende 5b auf. Das geschlossene Ende 5a ist durch einen Deckel 8 verschlossen, an dem die Lampe 3 angeordnet ist. Das hohlzylindrische Gehäuse 5 ist als Kollimator ausgebildet, wobei an dem offenen Ende 5b eine Strahlungsöffnung 7 in Form einer Apertur angeordnet ist. Die Apertur wird durch eine Kragenwand 9 gebildet. Eine Abdeckung 11 kann die Strahlungsöffnung 7 verschließen, wodurch der Innenraum 13 des Gehäuses 5 gegenüber Umwelteinflüssen geschützt ist. Neben der Lampe 3 ist ein erster Sensor 15 angeordnet, mittels dem ein erster Eigenschaftswert der Lampe 3 gemessen werden kann. Der erste Sensor 15 kann beispielsweise ein Temperatursensor sein, der die Temperatur der Lampe 3 bestimmt. Ferner ist neben der Lampe 3 ein Kühlsystem 17 angeordnet, mit dem die Lampe 3 gekühlt werden kann. Eine nicht dargestellte Steuervorrichtung kann beispielsweise mittels der durch den ersten Sensor 15 ermittelten Temperaturwerte bestimmen, ob die Lampe 3 gekühlt werden muss. Eine nicht dargestellte justierbaren Stromquelle versorgt die Lampe 3 mit Strom.

In dem Innenraum 13 des Gehäuses 5 ist ferner eine Vorrichtung 19 zur Erzeugung einer Luftströmung angeordnet, die eine Luftströmung in Richtung zu der Strahlungsöffnung 7 hin erzeugt. Dadurch kann eventuell in den Innenraum 13 eindringender Staub durch die Luftströmung aus dem Innenraum 13 befördert werden, wodurch die Verschmutzungsneigung der Lampe 3 gering gehalten wird. An der umlaufenden Kragenwand 9 ist ferner ein zweiter Sensor 21 angeordnet, der als Photodiode ausgebildet sein kann und der die von der Lampe 3 ausgestrahlte Lichtstrahlung misst.

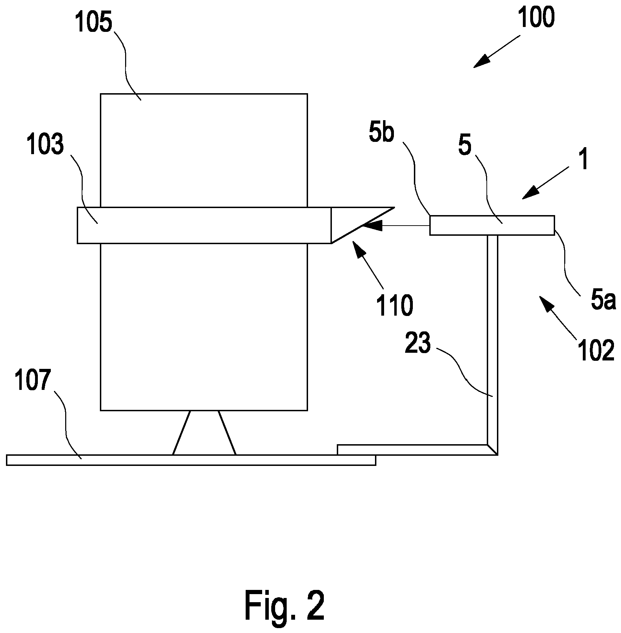

In Fig. 2 ist ein erfindungsgemäßes Strahlungssensorsystem 100 schematisch dargestellt. Das Strahlungssensorsystem 100 dient zur Bestimmung von Solarstrahlung und weist eine Sensorvorrichtung 103 auf, die beispielsweise als Direktstrahlungssensor ausgebildet sein kann. Die Sensorvorrichtung 103 ist an einer Nachführeinrichtung 105 angeordnet, die auf einer Basis 107 gelagert ist. Mittels der Nachführeinrichtung 105 kann die Sensorvorrichtung 103 dem Sonnenstand nachgeführt werden, wobei Solarstrahlung durch ein Eintrittsfenster 110 in die Sensorvorrichtung 103 gelangen kann.

Das Strahlungssensorsystem 100 weist darüber hinaus eine Zustandsbestimmungsvorrichtung 102 mit einem erfindungsgemäßen Leuchtensystem 1 auf. Mittels der Nachführeinrichtung 105 ist die Sensorvorrichtung 103 zu dem Leuchtensystem 1 ausrichtbar, sodass Licht, das im Inneren des Gehäuses 5 des Leuchtensystems 1 erzeugt wird, auf die Sensorvorrichtung 103 gestrahlt werden kann, sodass beispielsweise eine Verschmutzung des Eintrittsfensters 110 bestimmbar ist.

Das Leuchtensystem 1 kann auch eine Bewegungsvorrichtung 23 aufweisen, die beispielsweise an der Basis 107 befestigt ist und mittels der das Gehäuse 5 in die in Fig. 2 dargestellte Ausrichtungsposition bewegbar ist. Dadurch kann beispielsweise sichergestellt werden, dass das Gehäuse 5 bei einer normalen Verwendung der Sensorvorrichtung 103 nicht störend ist und lediglich für die Zustandsbestimmung in die Ausrichtungsposition bewegt wird.

Grundsätzlich kann das erfindungsgemäße Strahlungssensorsystem 100 auch eine Sensorvorrichtung in Form eines Globalstrahlungssensors aufweisen, der stationär angeordnet ist, wobei dann das Gehäuse 5 des Leuchtensystems 1 mittels der Bewegungsvorrichtung 23 entsprechend zu der Sensorvorrichtung 103 ausgerichtet wird.

Mittels des erfindungsgemäßen Strahlungssensorsystems 100 ist eine besonders genaue Zustandsbestimmung der Sensorvorrichtung 103 möglich, da mittels des erfindungsgemäßen Leuchtensystems 1 Licht mit einer konstanten Bestrahlungsstärke oder einer Bestrahlungsstärke mit einer bekannten Abweichung von einem Referenzpunkt erzeugbar ist.

### Bezugszeichenliste

- 1: Leuchtensystem
- 3: Lampe
- 5: Gehäuse
- 5a: geschlossenes Ende
- 5b: offenes Ende
- 7: Strahlungsöffnung
- 8: Deckel
- 9: umlaufende Kragenwand
- 11: Abdeckung
- 13: Innenraum
- 15: erster Sensor
- 17: Kühlsystem
- 19: Vorrichtung zur Erzeugung einer Luftströmung
- 21: zweiter Sensor
- 23: Bewegungsvorrichtung
- 100: Strahlungssensorsystem
- 102: Zustandsbestimmungsvorrichtung
- 103: Sensorvorrichtung
- 105: Nachführeinrichtung
- 107: Basis
- 110: Eintrittsfenster

## Patentansprüche

1. Leuchtensystem (1) zur Erzeugung von Licht einer konstanten Bestrahlungsstärke oder einer Bestrahlungsstärke mit einer bekannten Abweichung von einem Referenzpunkt,
mit mindestens einer Lampe (3), mit einem länglichen Hohlkörper als Gehäuse (5), wobei das Gehäuse (5) ein geschlossenes Ende (5a) und ein offenes Ende (5b) aufweist, wobei die Lampe (3) in dem Gehäuse (5) angeordnet ist und das offene Ende (5b) eine Strahlungsöffnung (7) bildet, mit einer Steuervorrichtung zum Steuern der mindestens einen Lampe (3), mit einer Konstantstromquelle und/oder einer justierbaren Stromquelle, die die mindestens eine Lampe (3) mit Strom versorgt und mit mindestens einem Sensor, der in dem Gehäuse (5) angeordnet ist und über den mindestens ein Eigenschaftswert der mindestens einen Lampe bestimmbar ist.

2. Leuchtensystem nach Anspruch 1, **gekennzeichnet durch** eine Abdeckung (11), mittels der die Strahlungsöffnung (7) verschließbar ist, wobei vorzugsweise die Abdeckung (11) als Klappe, verschließbare Blende oder Rollladen ausgebildet ist.

3. Leuchtensystem nach Anspruch 1 oder 2, **dadurch gekennzeichnet, dass** das Gehäuse (5) als Kollimator mit Apertur ausgebildet ist, wobei die Apertur die Strahlungsöffnung (7) bildet.

4. Leuchtensystem nach einem der Ansprüche 1 bis 3, **dadurch gekennzeichnet, dass** die mindestens eine Lampe (3) als mindestens eine LED ausgebildet ist.

5. Leuchtensystem nach einem der Ansprüche 1 bis 4, **dadurch gekennzeichnet, dass** der mindestens eine Sensor ein Temperatursensor ist, wobei über den Sensor eine Temperatur der mindestens einen Lampe (3) als Eigenschaftswert der Lampe bestimmbar ist.

6. Leuchtensystem nach einem der Ansprüche 1 bis 5, **gekennzeichnet durch** eine Vorrichtung (19) zur Erzeugung einer Luftströmung in dem Gehäuse (5), wobei die Luftströmung in Richtung zu der Strahlungsöffnung (7) gerichtet ist, wobei vorzugsweise die Vorrichtung (19) zur Erzeugung einer Luftströmung ein in oder an dem Gehäuse (5) angeordneter Ventilator ist.

7. Leuchtensystem nach einem der Ansprüche 1 bis 6, **gekennzeichnet, durch** einen abnehmbaren Deckel (8), der das hohlzylindrische Gehäuse (5) am geschlossenen Ende (5a) verschließt, wobei in oder an dem Deckel (8) die mindestens eine Lampe (3) und der mindestens eine Sensor angeordnet ist.

8. Leuchtensystem nach einem der Ansprüche 1 bis 7, **dadurch gekennzeichnet, dass** der mindestens eine Sensor eine Photodiode ist, die die von der mindestens einen Lampe (3) ausgestrahlte Lichtstrahlung misst.

9. Leuchtensystem nach einem der Ansprüche 1 bis 8, **gekennzeichnet durch** ein Kühlsystem (17) für die mindestens eine Lampe (3) und/oder dass die Steuervorrichtung einen Zeitschalter aufweist, über den die mindestens eine Lampe (3) angesteuert wird.

10. Leuchtensystem nach einem der Ansprüche 1 bis 9, **dadurch gekennzeichnet, dass** das Gehäuse (5) an einer Bewegungsvorrichtung (23) angeordnet ist, wobei die Bewegungsvorrichtung (23) das Gehäuse (5) zu einem zu beleuchtenden Objekt bewegt.

11. Strahlungssensorsystem (100) zur Bestimmung von Solarstrahlung, mit mindestens einer Sensorvorrichtung (103) und einer Zustandsbestimmungsvorrichtung (102), wobei die Zustandsbestimmungsvorrichtung (102) ein Leuchtensystem (1) nach einer der Ansprüche 1 bis 10 aufweist.

12. Strahlungssensorsystem nach Anspruch 11, **dadurch gekennzeichnet, dass** die Sensorvorrichtung (103) ein Direktstrahlungssensor ist, wobei der Direktstrahlungssensor und das Leuchtensystem (1) zur Durchführung einer Zustandsbestimmung zueinander ausrichtbar sind.

13. Strahlungssensorsystem nach Anspruch 12, **dadurch gekennzeichnet, dass** der Direktstrahlungssensor an einer Nachführeinrichtung (105) angeordnet ist, mittels der der Direktstrahlungssensor zu dem Leuchtensystem (1) ausrichtbar ist.

14. Strahlungssensorsystem nach Anspruch 11, **dadurch gekennzeichnet, dass** die Sensorvorrichtung (103) ein Globalstrahlungssensor ist, wobei der Globalstrahlungssensor und das Leuchtensystem (1) zur Durchführung einer Zustandsbestimmung zueinander ausrichtbar sind.

15. Strahlungssensorsystem nach Anspruch 14, **dadurch gekennzeichnet, dass** der Globalstrahlungssensor an einer Bewegungseinrichtung angeordnet ist, mittels der der Globalstrahlungssensor zu dem Leuchtensystem (1) ausrichtbar ist oder dass die Bewegungsvorrichtung (23) das Gehäuse zum Ausrichten des Leuchtensystems (1) mit dem Globalstrahlungssensor zu dem Globalstrahlungssensor bewegt.
